# EUROPEAN PATENT APPLICATION

(11) **EP 4 521 478 A1**
(43) Date of publication of application: **12.03.2025**
(21) Application number: 24195282.9
(22) Date of filing: 20.08.2024
(51) Int. Cl.: H01M 4/04, H01M 4/134, H01M 4/1395, H01M 4/36, H01M 4/38, H01M 4/62, H01M 10/052

(54) **COMPOSITION AND METHOD FOR A PROTECTIVE LAYER OF A METAL ELECTRODE OF A SECONDARY BATTERY**

(30) Priority: 06.09.2023 EP 23195714
(71) Applicant: Evonik Operations GmbH, 45128 Essen (DE)
(72) Inventor: Takata, Ryo, Shanghai 200233 (CN); Dehe, Daniel, 63486 Bruchköbel (DE); Esken, Daniel, 63526 Erlensee (DE); Schmidt, Franz, 64521 Groß-Gerau (DE); Alarcon, Carlos, 63450 Hanau (DE); Fang, Chia-Chen, Taipei City 106 (TW); Wu, Nae-Lih, Taipei 106 (TW)
(74) Representative: Evonik Patent Association

(57) **Abstract**

A composition for a coating layer of an electrode of a secondary battery, especially a lithium battery, the composition comprising an organic binder and a metal compound selected from the group consisting of a surface modified magnesium oxide, surface modified lithium doped magnesium oxide, surface modified magnesium phosphate or mixtures thereof.

## Description

### Field of the Invention

The present invention relates generally to a composition and method for a protective layer of an electrode of a secondary battery, especially a lithium battery. The invention further relates to the electrode, and the secondary battery, especially a lithium battery employing using the electrode with the protective layer. The method further relates to an electronic or electrical apparatus employing the secondary battery, especially a lithium battery.

### Background of the Invention

Lithium metal batteries (LMB), such as lithium-sulfur (Li-S), lithium-air (Li-air), and solid-state lithium batteries have been reported to overcome at least some of the limitations of the lithium-ion batteries, such as lacking high energy storage capacity. However, the intrinsic properties of metallic Li generate issues regarding battery safety and instability and may lead to limited cycle-life. The highly reactive nature of Li triggers different processes with, generally, detrimental effect on the cycle-life of the battery such as liquid electrolyte degradation, Solid- Electrolyte-Interface (SEI) formation, corrosion of the Li anode due to the presence of minor traces of water in the electrolyte, Li dendrite formation, and Li passivation through polysulfide shuttle effect in Li-S batteries. Consequently, successful stabilization/protection of Li anode is highly desirable for further development of LMB technology.

A recent approach for stabilizing the lithium metal-electrolyte interface with a soft polymeric coating shows potential for improving the rate and capacity of lithium metal cycling. Thus, the controlled protection of Li anode with organic and/or inorganic materials has been disclosed to have a beneficial effect on the performance of the battery.

CN1 09473627A describes preparation of a composite electrode comprising lithium metal, inorganic nanomaterial, such as titanium oxide, alumina, silica, boehmite, zirconia, having a particle size of 50-500 nm, an organic polymer and a membrane material by the following steps: (1) preparing a solution of a polymer and inorganic particles; (2) coating this solution of the surface of the membrane and subsequent drying; (3) grinding the dried composite material prepared in step (2) with metal lithium to form composite electrode particles covered with a composite layer and (4) shaping the composite electrode material to form metal lithium electrode sheet comprising lithium particles covered with a protective layer.

US 20170062829 A1 describes a lithium metal battery comprising a lithium metal anode with a protective layer comprising a polymer, e.g., a styrene-isoprene co-polymer, at least one metal salt, and a nitrogen-containing additive, such as LisN. This protective layer may also contain not further specified in detail inorganic particles such as TiO₂, ZnO, Al₂O₃, SiO₂ with particle size of about 1-500 nm.

US 20140220439 A1 describes an alkaline metal anode coated with a protective coating comprising inorganic particles, such as those containing the elements Al, Mg, Fe, Sn, Si, B, Cd, Sb, dispersed throughout a matrix of an organic compound, such as pyrrolidine derivatives.

US 20170301920 A1 describes lithium metal electrode coated with a protective layer comprising a polymer ionic liquid, optionally inorganic nanoparticles, such as SiO₂, Al₂O₃, TiO₂, MgO, ZrO₂, ZnO, Fe*₃*O*₄*, barium titanate, lead titanate, lithium nitride, lithium aluminate.

Jang et al. describe in Adv. Funct. Mater. 2019, vol. 29 (48), No. 1905078, preparation of coated lithium metal anodes including mixing ZrOz powder with particle size 5 µm or a Al₂O₃ powder with an average particle size of 500 nm with a poly-vinylidene fluoride-co-hexafluoropropylene (PVDF-HFP) polymer, DMF, and an electrolyte, coating this slurry on the lithium metal foil of 450 µm thickness and drying to form a coating layer of 21.7 µm thickness.

US20180316051A1 describes a negative electrode for a lithium metal battery including a lithium metal layer, lithium metal alloy and a protective layer having inorganic particles having a particle size of greater than about 1µm to about 100µm or less.

WO 2019149939 A1 describes lithium metal anode coated with a protective layer having a thickness of 0.01 to 10 µm, consisting a polymer and up to 30 wt.%, relative to polymer, of inorganic particles such as Al₂O₃, MnO, MnO₂, SiO₂, TiO₂, ZnO, ZrO₂, Fe₂O₃, CuO, silicate, alumosilicate, borosilicate, having an average particle diameter of 1-500 nm.

Lee, Y., Fujiki, S., Jung, C. et al. describe in Nature Energy volume 5, pages 299-308 (2020) a high-performance all-solid-state lithium metal battery with a sulfide electrolyte and an Ag-C composite anode with no excess lithium. The metal layer of the composite Ag-C anode of this system can effectively regulate Li deposition, which leads to a prolonged electrochemical cyclability. Thus, in this case not a classical lithium anode is used, but a silver-based anode, whereon a lithium layer is reversibly deposited during the operation of the lithium battery.

US20200106103A1 describes a material of a protection layer comprising polymer or a mixture of polymer and inorganic material, wherein the inorganic material is selected from the group consisting of HfO₂, SrTiOs, SnO₂, CeO₂, MgO, NiO, CaO, BaO, ZnO, ZrO₂, Al₂O₃, TiO₂, SiO₂, Li₃PO₄, Li₂O, LiF, LiOH, Li₂CO₃, Li containing metal oxides, Li containing phosphates and any combination thereof.

WO2021144299 A1 describes a lithium metal anode coated with a protective layer having a thickness of 0.5 to 500 µm, comprising a polymer and a metal compound selected from the group consisting of aluminum oxide, silicon dioxide, zirconium oxide, mixed oxides 5 comprising zirconium, mixed oxides comprising aluminum, lithium zirconium phosphate and mixtures thereof, wherein the metal compound consists of aggregates of primary particles with a number mean primary particle size d50 of 5nm - 100 nm obtained by a pyrogenic process.

### Problem and solution

WO2021144299 A1 teaches that higher BET surface area of nanosized metal oxide particles further improves the electrochemical performance of Li metal batteries. However, increasing the BET surface area of the metal oxide particles in the protective layer leads to a difficulty in obtaining a stable coating dispersion and coating slurry on a metal anode.

Importantly, the physicochemical properties of inorganic particles, such as the kind of particles, their particle size, particle size distribution, aggregation and agglomeration, surface of particles as well as the content of such particles which are used for the protective coating or layer of the metal lithium electrode, affect the chemical stability of the metal lithium electrode during the cycling of lithium metal batteries.

The problem addressed by the present invention is how to provide higher cycling stability for secondary batteries such as lithium batteries and especially lithium metal batteries.

The present invention provides an improved composition for a protective layer for a metal electrode of a secondary battery that improves the cycling stability of the secondary battery, in particular lithium batteries and more in particular lithium metal batteries.

### Summary of the invention

The present invention relates generally to a composition and method for a protective layer of a metal electrode of a secondary battery, to the metal electrode, the secondary battery using the electrode and to an electronic or electrical apparatus employing the secondary battery as defined in the independent claims. Embodiments of the present invention are defined in the dependent claims. A feature from one embodiment may be combined with one or more features of another embodiment so long as the features are not contradictory to each other.

In the course of thorough experimentation, it has been surprisingly found that the combination of an organic binder with pyrogenically produced surface modified magnesium oxide particles is particularly suitable for coating of metal electrodes, e.g., lithium electrodes for the lithium-ion batteries.

These and other features and advantages of the present invention will become apparent from the following description and drawings.

### Brief Description of the Drawings

Figure 1 is a simplified schematic illustration of an electrode according to an embodiment of the present invention.
Figure 2 is a flowchart of a method for making an electrode according to an embodiment of the present invention.
Figure 3 is a simplified schematic illustration of a secondary battery according to an embodiment of the present invention.
Figure 4 is a simplified schematic illustration of an electronic or electrical apparatus according to an embodiment of the present invention.
Figure 5 shows cycles with polarized voltages at a current density of 1 mA/cm² using AEROXIDE^{®} Alu 130 (Comparative example 1) as filler in a protective layer on a Li layer.
Figure 6 shows cycles with polarized voltages at a current density of 1 mA/cm² using Alu 130 805 (Example 6) as filler in a protective layer on a Li layer.
Figure 7 shows cycles with polarized voltages at a current density of 1 mA/cm² using Alu 200 (Example 7) as filler in a protective layer on a Li layer.
Figure 8 shows cycles with polarized voltages at a current density of 1 mA/cm² using MgO-01 (Example 8) as filler in a protective layer on a Li layer.
Figure 9 shows cycles with polarized voltages at a current density of 1 mA/cm² using MgO 805 (Example 10) as filler in a protective layer on a Li layer.
Figure 10 shows cycles with polarized voltages at a current density of 1 mA/cm² without a protective layer (Comparative example 2).
Figure 11 shows Polarized voltages at 200th cycle at a current density of 1 mA/cm² with the various examples.

### Detailed Description of the Invention

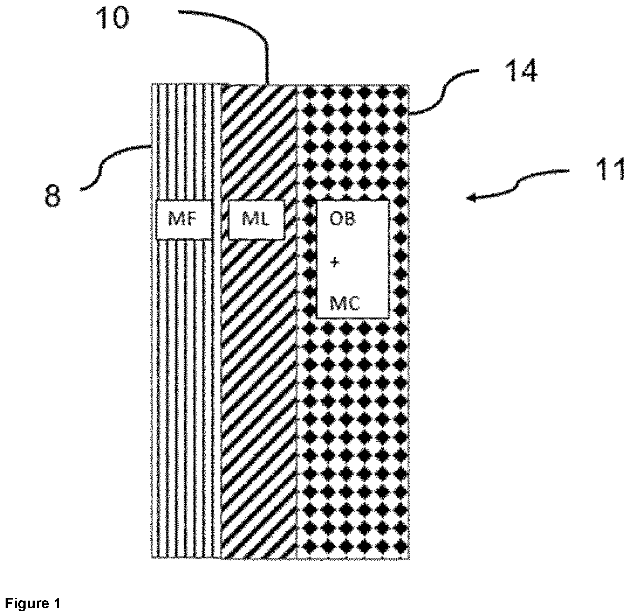

Referring to figure 1 an electrode 11 for a secondary battery is provided according to an embodiment of the present invention. The electrode 11 comprises a metal layer 10 coated with a coating layer 14. The coating layer 14 comprises an organic binder "OB" and a metal compound "MC".

The metal compound MC is selected from the group consisting of hydrophobic surface modified fumed magnesium oxide, hydrophobic surface modified lithium doped fumed magnesium oxide, hydrophobic surface modified fumed magnesium phosphate and mixtures thereof.

The metal compound MC is obtained by a pyrogenic (also known as "fume" or "fumed") process. A pyrogenic process in the context of the present invention may involve, flame oxidation, flame hydrolysis or flame pyrolysis. Such processes involve oxidizing or hydrolyzing a hydrolysable or oxidizable starting material, generally in a hydrogen and/or oxygen flame.

Preferably, the pyrolysis may be a flame spray pyrolysis. An example of a flame spray pyrolysis process is described in WO2015173114 A1 entitled "method for producing mixed oxide powder comprising lithium, lanthanum, and zirconium" to Katusic et al., also, in US 2022/0306485 A1 entitled "preparation of nanostructured mixed lithium zirconium oxides by means of spray pyrolysis" to Shafer et al. and elsewhere.

The flame spray pyrolysis preferably comprises the following steps:
at least one solution of metal precursors is atomized to afford an aerosol by means of an atomizer gas,
the aerosol is brought to reaction in the reaction space of the reactor with a flame obtained by ignition of a mixture of fuel gas and an oxygen-containing gas to obtain a reaction stream,
the reaction stream is cooled and
the solid metal oxide is subsequently removed from the reaction stream.

Hence, the flame spray pyrolysis process (FSP) may comprise atomizing the solution of a metal precursor, such as magnesium chloride, magnesium sulfate, magnesium carbonate, magnesium hydroxide, magnesium lactate, magnesium citrate, magnesium glutamate, and magnesium aspartate, in an atomizer (also often referred to as a vaporizer) and feeding the vapors into a mixing chamber. The vapors may be transferred into a mixing chamber via an inert carrier gas. Separately, fuel gas comprising hydrogen and primary air may be introduced into the mixing chamber. The air may optionally be enriched with oxygen. The air may optionally be pre-heated before supplied to the mixing chamber. Hydrogen may be preferably used in a small excess compared to the theoretical needed for the formation reactions.

The magnesium oxide powder that is formed from the FSP may then be separated from the gas in a downstream gas-solid separation unit and deposited at the bottom of a gas-solid separation unit (e.g., a cyclone) and collected via a bottom outlet. The powder from may be transferred to a deacidification equipment for removing the acid from the powder and the magnesium oxide powder is treated with air and steam which are fed in a counter-current direction inside the equipment at an elevated temperature of 100 °C - 700 °C, more preferably at 150 °C - 650 °C, even more preferably at 200 °C - 600 °C, still more preferably at 250 °C - 550 °C. The powder is collected in a silo and can be further processed as may be needed, e.g., may be packed.

Suitable starting materials for the pyrogenic process may include organic and/or inorganic magnesium compounds, such as magnesium chlorides, magnesium nitrates, magnesium acetates, and magnesium carboxylates. In a flame hydrolysis process, for example, metal precursors such as magnesium chlorides, are usually vaporized and reacted in a flame generated by the reaction of hydrogen and oxygen to form the magnesium oxide particles. The thus obtained powders are referred to as "pyrogenic" or "fumed" magnesium oxide metal compounds.

The reaction initially forms highly disperse primary particles, which in the further course of reaction coalesce to form aggregates, i.e., strongly bound primary particles and agglomerates. The agglomerates are relatively weakly bound aggregates. The aggregate dimensions of these powders are generally are in a range of 0.05 µm - 50 µm.

These powders are converted into nanometer (nm) range particles, which are suitable for the purposes of the present invention, by suitable-grinding that breaks the agglomerates but does not substantially change the aggregates of the primary particles.

The metal compound (e.g., the magnesium oxide) used in the present invention may preferably have a specific surface area (BET) of 1 m²/g to 500 m²/g, more preferably 20 m²/g to 400 m²/g, even more preferably from 40 m²/g to 350 m²/g and most preferably from 50 m²/g to 300 m²/g.

The specific surface area, also referred to simply as BET surface area, can be determined according to DIN 9277:2014 by nitrogen adsorption in accordance with the Brunauer-Emmett-Teller method.

In some embodiments, the product of the pyrogenic process is subjected to a further thermal treatment at a temperature of 100 to 350 °C.

In some embodiments, a mixed metal oxide comprising magnesium oxide may be used. For example, the mixed oxide may comprise magnesium oxide, lithium doped magnesium oxide, magnesium phosphate or a mixed oxide or phosphate comprising lithium, magnesium, phosphorous and oxygen. These compounds are referred to simply as metal compound MC.

The particles of the metal compound used in the present invention, which is obtained by a pyrogenic process, are usually mostly in the form of aggregates, although some particles can be in the form of non-aggregated primary particles. The metal compound MC preferably has a number mean aggregate particle size d50 of less than 2 µm, preferably 20 nm - 1 µm, more preferably 30 nm - 800 nm, even more preferably 40 nm - 600 nm, and most preferably 50 nm - 500 nm. The number mean particle size d50 can be determined in a suitable dispersion, e.g., in an aqueous dispersion, by static light scattering (SLS) method.

In some embodiments, the agglomerates and partly the aggregates can be destroyed, e.g., by grinding or ultrasonic treatment of the powder obtained by the pyrogenic process which results in particles with a smaller particle size and a narrower particle size distribution. In such embodiments, preferably, the number mean aggregate particle diameter d50 50 nm - 1000 nm, more preferably 100 nm - 700 nm, even more preferably 150 nm - 500 nm, as determined by dynamic light scattering (DLS) or static light scattering (SLS) after 300 s of ultrasonic treatment at 25 °C of a mixture consisting of 5 % by weight of the particles and 95 % by weight of a 0.5 g/L solution of sodium pyrophosphate in water of the metal compound after the grinding is.

Moreover, the powder obtained with the grinding or the ultrasonic treatment of the pyrogenically obtained powder, has a span defined as (d90-d10)/d50 of preferably 0.4-1.2, more preferably 0.5-1.1, even more preferably 0.6-1.0, as determined by static light scattering (SLS) after 300 s of ultrasonic treatment at 25 °C of a mixture consisting of 5 % by weight of the particles and 95 % by weight of a 0.5 g/L solution of sodium pyrophosphate in water.

Thus, the metal compound MC present in the coating layer 14 of the electrode 11 of the present invention is preferably characterized by a relatively small number mean aggregate particle size d50 and narrow particle size distribution (d90-d10)/d50. This helps to achieve a high-quality metal compound coating of the lithium electrode.

The d values d10, d50 and d90 are commonly used for characterizing the cumulative particle diameter distribution of a given sample. For example, the d10 diameter is the diameter at which 10% of a sample's volume is comprised of smaller than d10 particles, the d50 is the diameter at which 50% of a sample's volume is comprised of smaller than d50 particles. The d50 is also known as the "volume median diameter" as it divides the sample equally by volume; the d90 is the diameter at which 90% of a sample's volume is comprised of smaller than d90 particles.

The tamped density of the metal compound present in the electrode of the invention can be from 20 g/L to 1000 g/L. The thermally untreated metal compound preferably has a tamped density of 20 g/L - 200 g/L, more preferably 25 g/L - 150 g/L, even more preferably 28 g/L - 130 g/L, still more preferably 30 g/L - 120 g/L.

Tamped density of a pulverized or coarse-grain granular material can be determined according to DIN ISO 787-11:1995 "General methods of test for pigments and extenders -- Part 11: Determination of tamped volume and apparent density after tamping". This involves measuring the apparent density of a bed after agitation and tamping.

### The surface treated metal compound

The metal compound MC present in the coating layer 14 of the electrode 11 according to the invention is subjected to a surface treatment, in particular a hydrophobic surface treatment for improving the compatibility of the metal compound particles with the organic binder OB and the solvent used in the coating process.

Hence, the metal compound MC present in the coating layer 14 of the electrode 11 is hydrophobic and may have a methanol wettability of a methanol content of greater than 5%, preferably of 10% to 80%, more preferably of 15% to 70%, even more preferably of 20% to 65%, and most preferably of 25% to 60% by volume in a methanol/water mixture.

The terms "hydrophobic" or "hydrophobized" in the context of the present invention relate to the particles having a low affinity for polar media such as water. The hydrophilic particles, by contrast, have a high affinity for polar media such as water.

The hydrophobicity of the hydrophobic materials may be achieved by the application of an appropriate nonpolar group to the surface of particles. The extent of the hydrophobicity of the metal compound can be determined via parameters including its methanol wettability, as described in detail, for example, in WO2011/076518 A1, pages 5-6. In pure water, hydrophobic particles of a metal compound separate completely from the water and float on the surface thereof without being wetted with the solvent. In pure methanol, by contrast, hydrophobic particles are distributed throughout the solvent volume and complete wetting takes place. In the measurement of methanol wettability, a maximum methanol content at which there is still no wetting of the metal compound, is determined in a methanol/water test mixture, meaning that 100% of the metal compound used remains separate from the test mixture after contact with the test mixture, in unwetted form. This methanol content in the methanol/water mixture in % by volume is called methanol wettability. The higher the level of such methanol wettability, the more hydrophobic the metal compound. The lower the methanol wettability, the lower the hydrophobicity and the higher the hydrophilicity of the metal compound.

Specifically, for the determination of the methanol wettability, in each case 0.2 g (± 0.005 g) of the surface treated particles are weighed into transparent centrifuge tubes. Portions of 8.0 ml of a methanol/water mixture with 10, 20, 30, 40, 50, 60, 70 or 80 vol.% methanol are added to each sample. The tubes are shaken for 30 seconds and then centrifuged at 2500 rotations per min for 5 minutes. The methanol wettability is the defined as the volume per cent of methanol for which the sediment volume is 100%. The higher the number the higher the hydrophobicity.

The metal compound of the present invention is preferably surface treated, thus hydrophobized, with a surface treatment agent selected from the group consisting of organosilanes, silazanes, acyclic polysiloxanes, cyclic polysiloxanes, and any mixture thereof.

The hydrophobic metal compound preferably has a carbon content of 0.1% to 15.0%, more preferably of 0.5% to 12.0% by weight, even more preferably of 1.0% to 10.0% by weight, and most preferably of 1.5% to 8.0% by weight. The carbon content may be determined by elemental analysis according to EN ISO3262-20:2000-Chapter 8. The analyzed sample is weighed into a ceramic crucible, provided with combustion additives and heated in an induction furnace under an oxygen flow. The carbon present is oxidized to CO2. The amount of CO2 gas is quantified by infrared detectors.

### The metal layer

The term "layer" in the context of the present invention means a continuous deposition of the corresponding substance or component on the surface of another substance or component.

The metal layer 10 of the inventive electrode 11, e.g., a lithium layer can additionally be supported on a metal foil 8, which serves as a current collector. This metal foil 8 may comprise lithium, natrium, potassium, magnesium, calcium, zinc, aluminum, copper, silver, gold, nickel, iron, indium, gallium, steel, stainless steel, titanium, or metal alloys thereof. Such metal alloys may also comprise non-metallic components, such as, for example, silicon, germanium. Most preferably, especially if the inventive electrode is used in combination with a liquid electrolyte, the metal foil 8 may consist of copper or aluminum. A stainless-steel foil may be preferably used in electrodes used in combination with solid electrolytes, for example, sulfidic electrolytes. The metal foil 8 may have a thickness of 0.5 µm - 500 µm, more preferably 1 µm - 100 µm, even more preferably 2 µm - 50 µm, and most preferably 5 µm - 30 µm. In some embodiments, the metal foil 8 may further be supported on a polymer substrate (not shown).

According to an embodiment of the invention, the metal layer 10 of the electrode 11, may have thickness of preferably 2 µm - 500 µm, more preferably 3 µm - 300 µm, even more preferably 5 µm - 200 µm and most preferably 7 µm - 180 µm.

The metal layer 10 may be disposed on the metal foil 8 by any suitable method, such as a vacuum deposition method, a rolling method, electrochemical deposition, or a lamination process to mention a few of such methods. These methods are well-known in the industry and, thus will not be described in any detail.

### The coating layer

The coating layer 14 for the electrode 11 comprises an organic binder OB and a metal compound MC selected from the group consisting of a hydrophobic surface modified fumed magnesium oxide, a hydrophobic surface modified lithium doped fumed magnesium oxide, a hydrophobic surface modified fumed magnesium phosphate, or mixtures thereof.

The weight ratio of the metal compound MC to the organic binder OB in the coating layer 14 is from 0.1 to 10, preferably from 0.2 to 9.5, more preferably from 0.3 to 9.0, even more preferably from 0.4 to 8.5, even more preferably from 0.5 to 8.0, even more preferably from 0.8 to 7.0, and most preferably from 1.0 to 6.0.

### The Electrode

The electrode 11 according to an embodiment of the invention may comprise a lithium salt, which can optionally be added in the coating layer 14. For example, in some embodiments, the lithium salt may be mixed together with the organic binder OB and the metal compound MC and then the mixture may be applied on the metal layer 10 of the electrode 11.

The lithium salt may be selected from the group consisting of lithium hexafluorophosphate (LiPF6), lithium bis 2 (trifluoromethylsulfonyl)imide (LiTFSI), lithium bis (fluorosulfonyl) imide (LiFSI), lithium perchlorate (LiCIO4), lithium tetrafluoroborate (LiBF4), Li2SiF6, lithium triflate, Lithium bis(perfluoroethylsulfonyl)imide (LiN(SO2CF2CF3)2), lithium nitrate, lithium bis(oxalate)borate, lithium-cyclo-difluoromethane-1,1-bis(sulfonyl)imide, lithium-cyclo-hexafluoropropane-1,1-bis(sulfonyl)imide and mixtures thereof.

Lithium bis (fluorosulfonyl) imide (LiFSI) or lithium bis 2 (trifluoromethylsulfonyl)imide (LiTFSI) may be preferably used as lithium salt in the coating layer 14 in batteries employing a solid electrolyte.

According to an embodiment, the thickness of the coating layer may be 0.1 µm - 300 µm, more preferably 0.5 µm - 100 µm, even more preferably 1 µm - 50 µm, and most preferably 2 µm - 20 µm.

### The organic binder

The organic binder OB for the coating layer 14 of the electrolyte provides an effective adhesion between the particles of the metal compound MC in the coating layer 14 and the surface of the metal layer 10 (e.g., lithium layer 10).

The organic binder is selected from the group consisting of poly(vinylidene fluoride), copolymer of vinylidene fluoride and hexafluoropropylene, poly(vinyl acetate), polyethylene oxide), poly(methyl methacrylate), poly(ethyl acrylate), poly(vinyl chloride), poly(urethane), poly(acrylonitrile), polyethylene glycol), polypropylene glycol, poly(ethylene glycol-co-propylene glycol-co-ethylene glycol), poly(propylene glycol-co-ethylene glycol-co-propylene glycol), polysiloxane, poly(oxyethylene)methacrylate, poly(ethylene glycol)diacrylate, poly(propylene glycol)diacrylate, poly(ethylene glycol)dimethacrylate, poly(propylene glycol)dimethacrylate, poly(ethylene glycol)-dimethyl ether, poly(ether amine), copolymer of ethylene and vinyl acetate, carboxyl methyl cellulose, poly(imide), and mixtures thereof.

More preferably the organic binder may be one of PVDF or PVDF-HFP. In particular, the PVDF-HFP is more preferred for coating on a lithium (Li) metal layer, while PVDF is more preferred for other metal layer like copper (Cu) layer/foil.

### The process for making the electrode

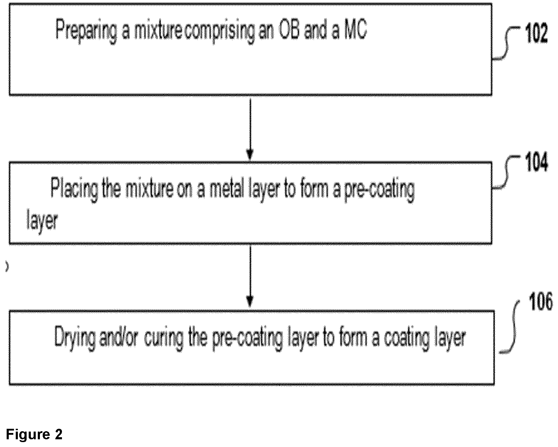

Referring now to figure 2, according to an embodiment of the invention a process for making the inventive electrode 11 is provided, the method comprising:
in step 102 preparing a mixture comprising an organic binder OB as described above, and a metal compound MC, as described above, obtained by a pyrogenic process in step 104 applying the mixture prepared in step 102 on a surface of a metal layer 10 to form a pre-coating layer; and in step 106 drying and/or curing the pre-coating prepared in step 104 to form the coating layer 14. In an embodiment, in the step 102 of preparing the mixture of the organic binder OB and the metal compound MC, a lithium salt may also be added and mixed with the organic binder OB and the metal compound MC. In an embodiment where semi-solid or solid electrolyte is used, Li ion conductivity in the protective layer may be improved by adding the lithium salt with the organic binder and the metal compound MC because no liquid goes into the protective layer.

The metal compound MC is selected from the group consisting of hydrophobic surface modified fumed magnesium oxide, hydrophobic surface modified fumed lithium doped magnesium oxide, hydrophobic surface modified fumed magnesium phosphate, and the mixtures thereof. The lithium salt may be selected from the group consisting of lithium hexafluorophosphate (LiPF6), lithium bis 2 (trifluoromethylsulfonyl)imide (LiTFSI), lithium bis (fluorosulfonyl) imide (LiFSI), lithium perchlorate (LiCIO4), lithium tetrafluoroborate (LiBF4), Li2SiF6, lithium triflate, Lithium bis(perfluoroethylsulfonyl)imide (LiN(SO2CF2CF3)2), lithium nitrate, lithium bis(oxalate)borate, lithium-cyclo-difluoromethane-1,1-bis(sulfonyl)imide, lithium-cyclo-hexafluoropropane-1,1-bis(sulfonyl)imide and mixtures thereof.

The metal compound consists of a pyrogenically obtained powder as described above. Preferably, the pyrogenically obtained powder may also be subjected to a grinding or ultrasonic treatment and to a surface modification treatment for further reducing the particle size of the powder and rendering them hydrophobic. The weight ratio of the metal compound to the organic binder is from 0.1 to 10, preferably from 0.2 to 9.5, more preferably from 0.3 to 9.0, more preferably from 0.4 to 8.5, more preferably from 0.5 to 8.0, more preferably from 0.8 to 7.5, more preferably from 1.0 to 6.0.

A solvent optionally may be used in the step 102 of the inventive process and may not be particularly limited, as long as it may dissolve the organic binder OB and does not react with the metal compound (e.g., the lithium metal) during the coating process. A non-exhaustive list of suitable solvents may comprise 1,2 dimethoxyethane, diethyl ether, tetrahydrofuran, dioxane, bis (2 methoxyethyl) ether, pentane, hexane, heptane, octane, decane, toluene, ethanol, isopropanol, N-Methyl-2-pyrrolidone, triethyl phosphate, dimethyl sulfoxide, methyl ethyl ketone, methyl isobutyl ketone, benzaldehyde, N,N-dimethylformamide, dimethylacetamide, acetonitril, cyclohexanone, ethyl acetate, propylene carbonate, ethylene carbonate, diethylene glycol monomethyl ether, triethylene glycol methyl ether, acetylacetone, acetone and the mixtures thereof.

The mixture prepared in step 102 of the process according to the invention may be obtained from two or more mixtures, for example, the first mixture may comprise the metal compound particles and a first solvent, the second mixture may comprise the organic binder, a second solvent and optionally a lithium salt. The first and second solvents may be the same or different. The first and second solvents may preferably be the same.

Preferably, the first mixture may comprise 1% - 70%, more preferably 3% - 60%, even more preferably 5% - 50%, and most preferably 7% - 45%, by weight of the metal compound and 30% - 99%, more preferably 40% - 97%, even more preferably 50% - 95%, and most preferably 55% - 93%, by weight of the solvent. The second mixture may comprise 0.1% - 90%, preferably 0.5% - 50%, more preferably 1% - 20%, more preferably 2% - 10%, by weight of the organic binder and 10% - 99.9%, preferably 50% - 99.5%, more preferably 80% - 99%, more preferably 90% - 98%, by weight of the solvent.

In step 104 of the inventive process, the metal layer 14 is coated with the mixture prepared in step 102 to form a pre-coating layer comprising the metal compound and the organic binder on the surface of the metal layer 14.

Any suitable coating method allowing application of a relatively thin coating layer may be applied. An example of a suitable apparatus for coating step is a doctor blade device SA-202 available commercially by the manufacturer Tester Sangyo.

The pre-coated layer on the metal layer 14 in step 104, is further dried and/or cured on the surface of the metal layer 14 in step 106 of the inventive process leading to the formation of the coated metal layer 14 on the metal layer 10 of the electrode 11.

Curing of the mixture of the pre-coated layer may occur, for example, by polymerization, crosslinking reaction or another type of chemical reaction or by physical curing such as, for example, by evaporation of the solvent or other volatile components of the binder. Chemical curing can take place, for example, thermally or under the action of UV radiation or other radiation.

Depending on the system used, step 106 may preferably take place at a temperature of from 0°C to 500°C, more preferably from 5°C to 400°C, more preferably from 10°C to 300°C, more preferably from 20°C to 150°C. The drying/curing step106 may take place in the presence of air or preferably with exclusion of oxygen, for example under a protective-gas atmosphere of nitrogen or argon. The drying/curing step 106 may take place under standard pressure. The drying curing step 106 may take place under a reduced pressure, for example under vacuum.

### Use of the electrode

The invention further relates to the use of the inventive electrode 11 as a constituent of a lithium metal, lithium-ion battery or other secondary battery, preferably of a lithium metal battery or a lithium-ion battery and more preferably a lithium metal battery.

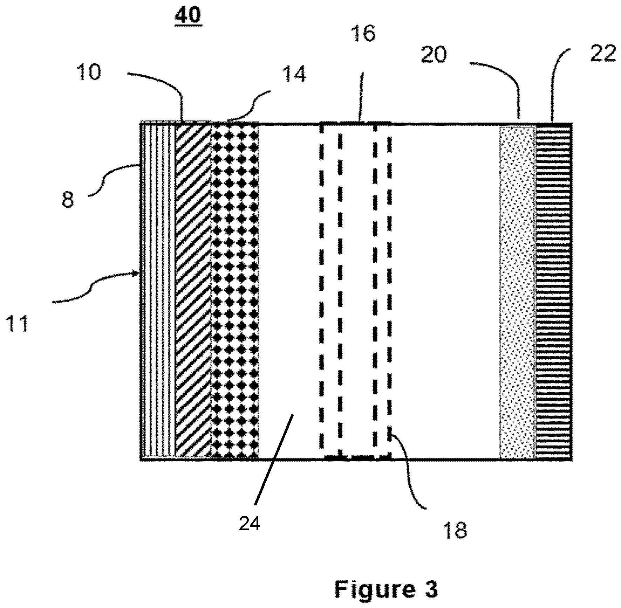

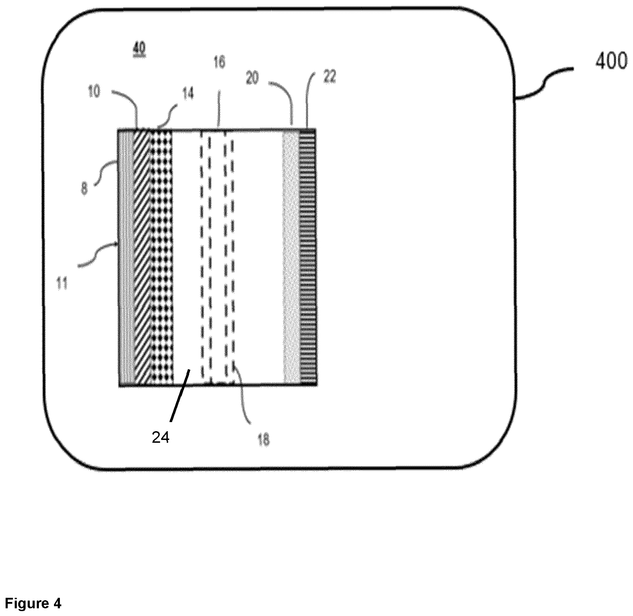

Figure 3 illustrates a lithium-metal battery generally designated with numeral 40 including a separator 16, 18, a first electrode 11, and a second electrode 20, 22. The first electrode 11 corresponds to the inventive electrode 11 of figure 1 with the coating layer 14, the metal layer 10. and the foil 8. The coating layer 14 may comprise the organic binder OB and the metal compound MC as described above and in some embodiments a lithium salt. The coating layer 14 may preferably be in the form of a powder of nanoparticles. The coating layer 14 may be formed on the metal layer 10 of the electrode 1 of figure 1. The coating layer 14 may have a thickness of 0.1 µm - 300 µm, more preferably 0.5 µm - 100 µm, even more preferably 1 µm - 50 µm, and most preferably 2 µm - 20 µm. An electrolyte 24 is placed around the separator 16, 18 and between the first and second electrodes. The separator 16, 18 may, for example, comprise a polymeric membrane 16 covered on both sides thereof with a ceramic coating 18. As schematically illustrated in figure 4, the lithium metal battery 40 may be used in electronic and electrical apparatuses 400 including, for example, mobile phones, computers (lap top computers, desk top computers, computer pads), electronic watches, key fabs, electric appliances, power tools, vacuum cleaners, electric lawn mowers and electric vehicles to mention just a few of the many uses of the lithium battery. The second electrode 20, 22 may comprise an active material 20 on an electrode plate 20.

In some embodiments, the method may include operatively connecting the first electrode 11 in the secondary battery 40 as the anode electrode of the secondary battery 40. The secondary battery 40 may be provided within an electronic or electrical apparatus 400 for providing power to the apparatus 400.

### Examples

Metal compound samples:
AEROXIDE^{®} Alu 130 which is a commercially available product of Evonik Operations GmbH.
Alu 130 805 is surface modified fumed alumina particles with Dynasylan^{®} OCTMO (octyltrimethoxysilane) with BET surface area of 130 m²/g.
Alu 200 is which is fumed aluminum oxide particles with BET surface area of 200 m²/g produced by gas phase synthesis.
MgO-1 is fumed magnesium oxide particles with BET of 70 m²/g that is produced by flame spray pyrolysis.
MgO-8 is fumed magnesium oxide particles with BET of 246 m²/g that is produced by flame spray pyrolysis.
MgO 805 which is surface modified magnesium oxide particles with Dynasylan^{®} OCTMO (octyltrimethoxysilane) with BET of 234 m²/g.

### Preparation of metal oxide particles :

### Comparative Example 1: Preparation of surface-modified aluminum oxide Alu 130 805

300 g of pyrogenically prepared aluminum oxide particles as AEROXIDE^{®} Alu 130 are placed in a mixer and sprayed with 48 g octyltrimethoxysilane (C₁₁H₂₆O₃Si). After the spraying of the silane on the powder is finished, mixing is continued for additional 5 min. Then tempering of the wetted powder is carried out for 3 h at 130 °C in an oven.

The hydrophilic and surface modified aluminum oxides have the particle property data are provided in Table 1.

### Comparative Example 2: Alu 200

Aluminum trichloride (AlCl₃) as a raw material precursor is first vaporized and 0.8 kg/h AlCl₃ in vapor phase are transferred into a mixing chamber. Separately from this, 0.7 m³/h of the combustion gas H₂ and 6.6 m³/h primary air are introduced into the mixing chamber. The reaction mixture is fed in a central tube to a burner and ignited. The flame burns in a water-cooled reaction chamber. To shield the flame 4.5 m³/h of secondary air is introduced into the reaction chamber as well. The powder formed is deposited in a downstream filter and then treated with air and steam in counter-current at approximately 660°C. The particle property characteristics of the produced powder are provided in Table 1.

### Comparative Example 3: Preparation of the pyrogenically prepared magnesium oxide (MgO-01)

An amount of 8,0 Kilogram of an aqueous solution containing 480 g of magnesium nitrate (Mg(NO₃)₂ · 6H₂O) was prepared. An aerosol of 2.5 kg/h of this dispersion and 15 Nm³/h of air was formed via a two-component nozzle and sprayed into a tubular reaction with a burning flame. The burning gases of the flame consisted of 16 Nm³/h of hydrogen and 30 Nm³/h of air. Additionally, 25 Nm³/h of secondary air was used. After the reactor, the reaction gases were cooled down and filtered. The particle property characteristics of the produced powder are provided in Table 1.

### Comparative Example 4: Preparation of the pyrogenically prepared magnesium oxide with high BET surface area (MgO-08)

An amount of 1,89 Kilogram of an aqueous solution containing 1000 g of hydrated magnesium acetate (Mg(CH₃COO)₂*4H₂O) was prepared. An aerosol of 2.5 kg/h of this dispersion and 15 Nm³/h of air was formed via a two-component nozzle and sprayed into a tubular reaction with a burning flame. The burning gases of the flame consisted of 8 Nm³/h of hydrogen and 30 Nm³/h of air. Additionally, 25 Nm³/h of secondary air was used. After the reactor, the reaction gases were cooled down and filtered. The high surface area, pyrogenically prepared hydrophilic magnesium oxide that forms has the physical characteristic data shown in Table 1.

### Example 1: Preparation of surface-modified magnesium oxide (MgO-805)

An amount of 300 g of pyrogenically prepared magnesium oxide (example 4) are placed in a mixer and sprayed with 72 g octyltrimethoxysilane (C₁₁H₂₆O₃Si). After the spraying of the silane on the powder is finished, mixing is continued for additional 5 min. Then tempering of the wetted powder is carried out for 3 h at 130 °C in an oven.

The hydrophilic and surface modified magnesium oxides have the physical-chemical characteristic data shown in Table 1.

**Table 1. Physical properties of the tested metal compound particles**

| Metal compounds | BET, [m²/g] | Surface modification |
|---|---|---|
| AEROXIDE^{®} Alu 130 | 130 | No |
| Alu 130 805 | 105 | With Dynasylan^{®} OCTMO |
| Alu 200 | 200 | No |
| MgO-01 | 67 | No |
| MgO-08 | 246 | No |
| MgO 805 | 234 | With Dynasylan^{®} OCTMO |

### Preparation of the coated electrode sheets

### Comparative example 5

A copper foil with a thickness of 12 µm covered with a lithium metal layer with a thickness of 100 µm was provided. AEROXIDE^{®} Alu 130 particles were dispersed in 1,2 dimethoxyethane (DME, C₄H₁₀O₂), to obtain a first solution with a solid content of 5 wt.%. Poly(vinylidene fluoride-co-hexafluoropropylene) (PVDF-HFP (supplier: Sigma-Aldrich, weight average molecular weight (Mw) about 400,000 g/mol) was also dissolved in DME, to obtain a second solution with a solid content of 5 wt.%.

The molecular weight was measured using the ISO 16014 standard.

Both the first and the second solution were stirred vigorously for several hours and then mixed together under stirring in such a ratio to produce a mixture with a 4:1 ratio (by weight) of alumina to the PVDF-HFP copolymer. This mixture was coated on the lithium metal layer by a solvent casting method. Specifically, the raw mixture slurry was stirred by a magnet stirrer in a 20 mL sample vial followed by coating the mixture slurry using a pen brush on the metal layer to form a mixture slurry layer covering the lithium metal layer. After application of the coating, the lithium metal layer with the mixture slurry layer is heated at 70°C for 30 min on a hot plate to vaporize the solvent and form an electrode sheet comprising the lithium metal layer and a coating layer. The electrode sheet forms a protective layer with a thickness of about 10 µm an during initial battery cycling. The ASEI forms on the surface of a secondary battery's electrode as a result of chemical reactions between the electrolyte and the electrode materials during initial battery cycling and acts as a protective layer against further reactions.

### Comparative Example 6

The same steps were followed as described in comparative example 1 with the difference that the aluminum oxide of Alu 130 805 was used instead of AEROXIDE^{®} Alu 130.

### Comparative Example 7

The same steps were followed as described in comparative example 1 with the difference that the aluminum oxide of Alu 200 was used instead of AEROXIDE^{®} Alu 130. After mixing first and second solution, the coating slurry was not stable for long time storage, nevertheless, the coating process was performed as soon as coating slurry was prepared.

### Comparative Example 8

The same steps were performed as described in comparative example 1 with the difference that the magnesium oxide of MgO-01 was used instead of AEROXIDE^{®} Alu 130.

### Comparative Example 9

The same steps were performed as described in comparative example 1 with the difference that the magnesium oxide of MgO-08 was used instead of AEROXIDE^{®} Alu 130. After mixing first and second solution, the mixed solution was chemically reacted and the color of the mixed solution turned in to black like color. So, no further testing was performed.

### Example 2

The same steps were performed as described in comparative example 1 with the difference that the magnesium oxide of MgO 805 was used instead of AEROXIDE^{®} Alu 130. After mixing first and second solution, a stable dispersion was obtained with this surface modified magnesium oxide particles.

### Comparative example 10:

No protective layer was coated on a Li-Cu foil. Li-Cu was directly used as electrode. Specifically, we used 12µm Cu foil with 100µm Li layer on top of the Cu foil.

Li-Li symmetrical cell fabrication in ether type liquid electrolyte

A 1 M lithium bis(fluorosulfonyl)imide solution in 1.2 : 3 mol/mol = 1,2-dimethoxyethane : 1,1,2,2-tetrafluoroethyl-2,2,3,3-tetrafluoropropyl ether was used as an electrolyte composition.

A first coated electrode sheet, a polypropylene-polyethylene-polypropylene (PP/PE/PP) separator (Celgard^{®} 2320, supplier: Celgard) with a thickness of about 10-20µm, and a second (identical to the first one) electrode sheet were placed in sequence (metal compound coating layer of each electrode sheet was faced toward the separator) and sealed within an CR2032 coin cell.

### Electrochemical characterizations (cell cycling tests)

Electrochemical cycling tests were carried out using CR2032-type coin cells on Arbin BT2000 battery testers at room temperature. Voltage vs. time(cycles) profiles during galvanostatic cycling of Li-Li cells are related to electrode stability and failure.

Voltage profiles of Li stripping and plating in a Li-Li symmetric cell were measured at a current density of 1.0mAh/cm².

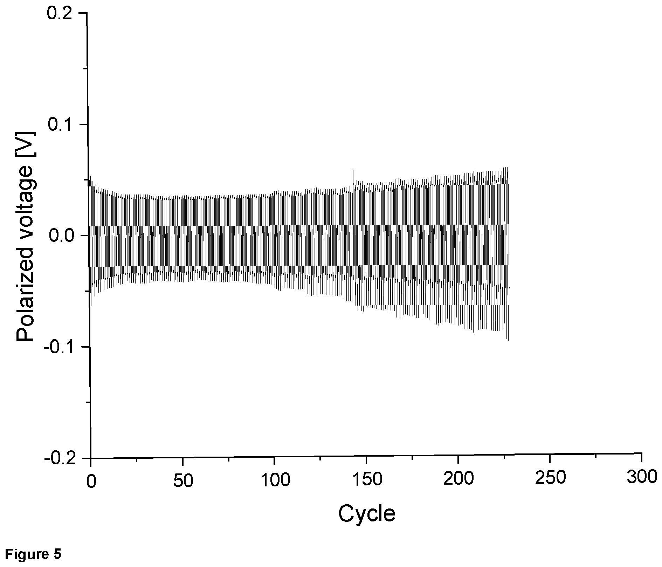

Figure 5 shows cycles with polarized voltages at the current density of 1 mA/cm² using AEROXIDE^{®} Alu 130 (Comparative example 5) as filler in the protective layer on the Li layer.

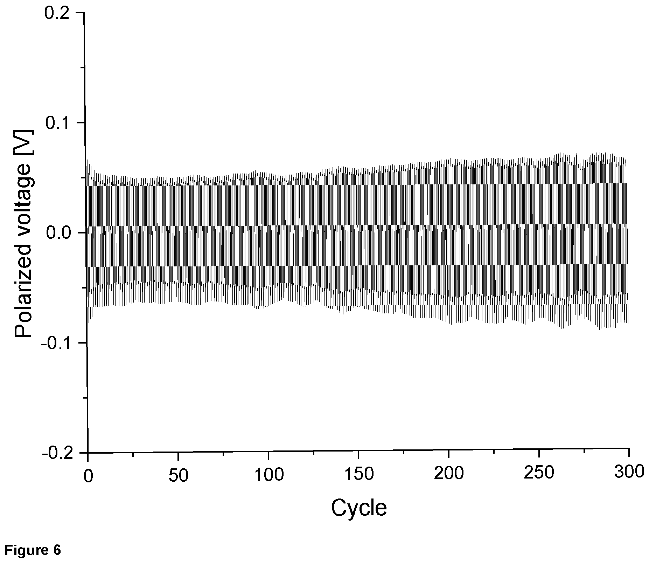

Figure 6 shows cycles with polarized voltages at the current density of 1 mA/cm² using Alu 130 805 (Comparative Example 6) as filler in the protective layer on the Li layer.

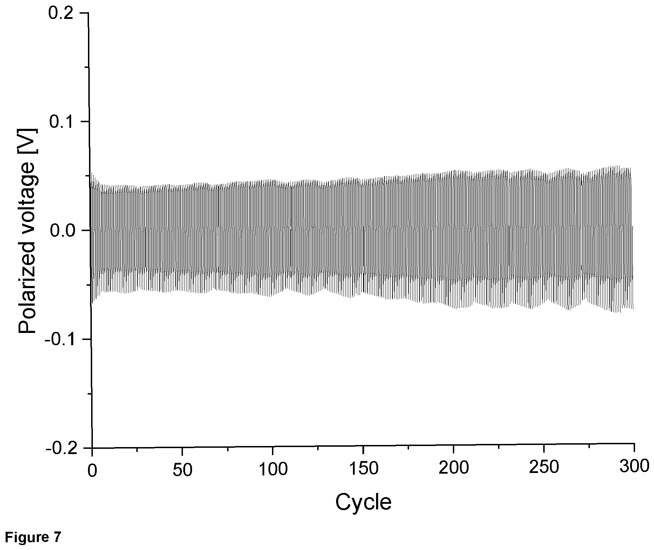

Figure 7 shows cycles with polarized voltages at the current density of 1 mA/cm² using Alu 200 (Comparative Example 7) as filler in the protective layer on the Li layer.

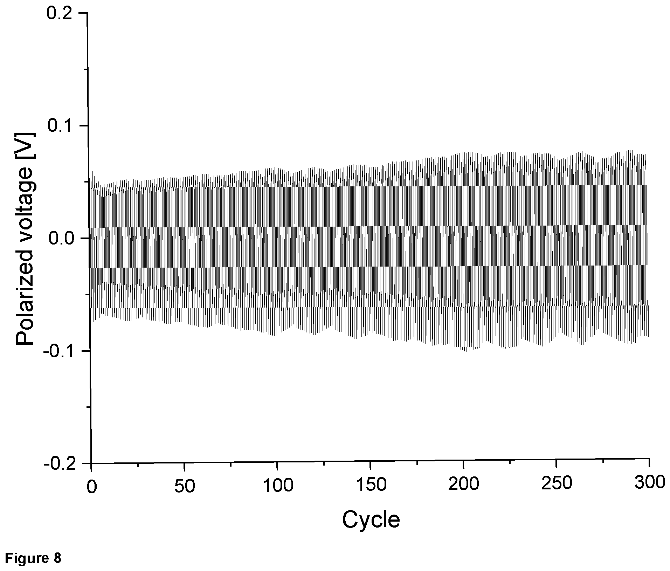

Figure 8 shows cycles with polarized voltages at the current density of 1 mA/cm² using MgO-01 (Comparative Example 8) as filler in the protective layer on Li layer.

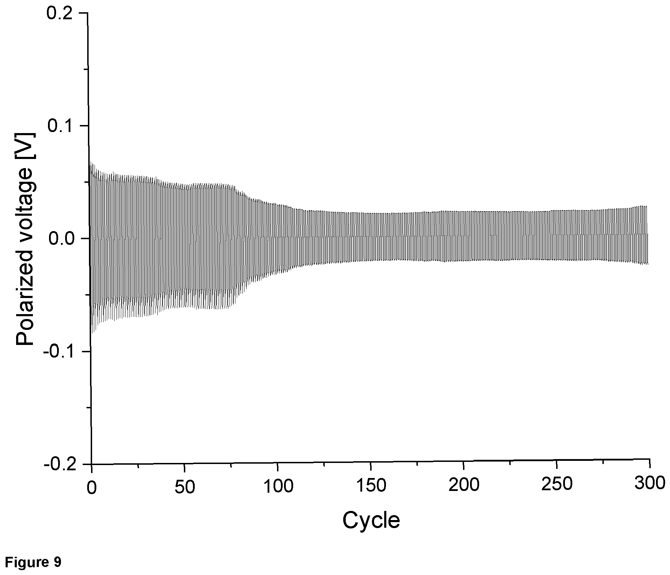

Figure 9 shows cycles with polarized voltages at the current density of 1 mA/cm² using MgO 805 (Example 10) as filler in the protective layer on Li layer.

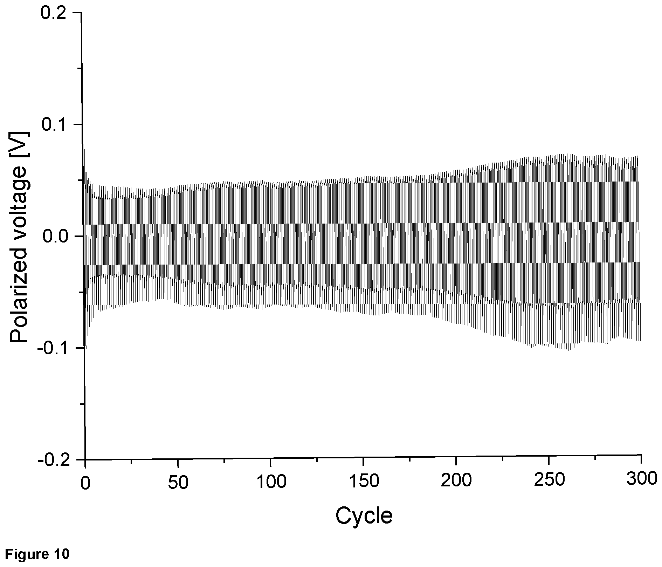

Figure 10 shows cycles with polarized voltages at the current density of 1 mA/cm² without protective layer (Comparative example 10).

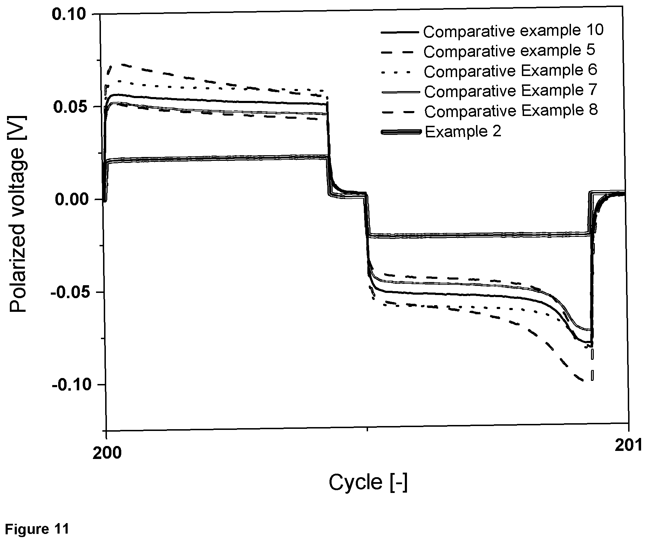

Figure 11 shows polarized voltages after 200 cycles at the current density of 1 mA/cm² with the examples.

**Table 2. Average polarized voltages of the coin cells without or with protective layer metal compound/ PVDF-HFP in the ether type electrolyte at 200th cycle as shown Figure 6.**

| Examples | Polarized voltage at 1.0 mA/cm² at 200th cycle |
|---|---|
| Comparative example 5 | 0.045 V |
| Comparative Example 6 | 0.059 V |
| Comparative Example 7 | 0.046 V |
| Comparative Example 8 | 0.062 V |
| Example 2 | 0.021 V |
| Comparative example 10 | 0.052 V |

The coated electrode sheets of example 2 showed most stable cycle performance with lowest polarized voltage. This mean that resistance of cell using surface modified magnesia can provide stable coating dispersion as well as stable electrochemical performance in Li metal battery with the composition of protective layer of the weight ratio of magnesia particles and PVDF-HFP = 4:1.

Although the invention has been described in reference to specific embodiments, it is noted that the embodiments are provided are not intended to limit the scope of the invention and that many other variations of the described embodiments and, also other embodiments of the invention may be envisioned by the skilled person after having read the present disclosure which do not depart from the scope of the invention as defined in the appended claims.

### List of Reference Numerals

- 8: metal foil
- 10: metal layer
- 11: electrode
- 14: coating layer
- OB: organic binder
- MC: metal compound
- 102, 104, 106,: process steps
- 400: Electrical or electronic device
- 40: battery
- 16: separator
- 18: separator coating
- 20: active material
- 22: electrode plate
- 24: electrolyte

## Claims

1. A composition for a coating layer of an electrode of a lithium battery, the composition comprising an organic binder and a metal compound selected from the group consisting of a hydrophobic surface modified fumed magnesium oxide, hydrophobic surface modified fumed lithium doped magnesium oxide, hydrophobic surface modified fumed magnesium phosphate or mixtures thereof, wherein the metal compound comprises aggregates of primary particles, wherein a weight ratio of the metal compound to the organic binder in the composition is from 0.1 to 10 and wherein the binder is selected from the group consisting of poly(vinylidene fluoride), copolymer of vinylidene fluoride and hexafluoropropylene, poly(vinyl acetate), polyethylene oxide), poly(methyl methacrylate), poly(ethyl acrylate), poly(vinyl chloride), poly(urethane), poly(acrylonitrile), polyethylene glycol), polypropylene glycol, polyethylene glycol-co-propylene glycol-co-ethylene glycol), polypropylene glycol-co-ethylene glycol-co-propylene glycol), polysiloxane, poly(oxyethylene)methacrylate, polyethylene glycol)diacrylate, poly(propylene glycol)diacrylate, polyethylene glycol)dimethacrylate, poly(propylene glycol)dimethacrylate, polyethylene glycol)-dimethyl ether, poly(ether amine), copolymer of ethylene and vinyl acetate, carboxyl methyl cellulose, poly(imide), and mixtures thereof.

2. The composition of claim 1, wherein the weight ratio of the metal compound to the organic binder is from 0.2 to 9.5, more preferably from 0.3 to 9.0, even more preferably from 0.4 to 8.5, even more preferably from 0.5 to 8.0, even more preferably from 0.8 to 7.0, and most preferably from 1.0 to 6.0.

3. The composition of any of the preceding claims, wherein the metal compound has a tamped density of from 20 g/L to 1000 g/L, preferably of 20 g/L - 200 g/L, more preferably 25 g/L - 150 g/L, even more preferably 28 g/L - 130 g/L, and most preferably 30 g/L - 120 g/L, wherein the tamped density is determined according to DIN ISO 787-11:1995.

4. The composition of any of the preceding claims, wherein the surface modified metal compound has a methanol wettability of a methanol content of greater than 5%, preferably of 10% to 80%, more preferably of 15% to 70%, even more preferably of 20% to 65%, and most preferably of 25% to 60%, by volume, measured as described in the specification.

5. The composition of any of the preceding claims further comprising a lithium salt, mixed together with the binder and the metal compound, the lithium salt being selected from the group consisting of lithium hexafluorophosphate (LiPF6), lithium bis 2 (trifluoromethylsulfonyl)imide (LiTFSI), lithium bis (fluorosulfonyl) imide (LiFSI), lithium perchlorate (LiCIO4), lithium tetrafluoroborate (LiBF4), Li2SiF6, lithium triflate, Lithium bis(perfluoroethylsulfonyl)imide (LiN(SO2CF2CF3)2), lithium nitrate, lithium bis(oxalate)borate, lithium-cyclo-difluoromethane-1,1-bis(sulfonyl)imide, lithium-cyclo-hexafluoropropane-1,1-bis(sulfonyl)imide and mixtures thereof, and/orwherein the metal compound is modified to become hydrophobic with a surface treatment agent selected from the group consisting of organosilanes, silazanes, acyclic polysiloxanes, cyclic polysiloxanes, and mixtures thereof, and wherein the hydrophobic metal compound preferably has a carbon content of 0.1% to 15.0%, more preferably of 0.5% to 12.0% by weight, even more preferably of 1.0% to 10.0% by weight, and most preferably of 1.5% to 8.0% by weight, wherein the carbon content is determined by elemental analysis according to EN ISO3262-20:2000 (Chapter 8).

6. An electrode for a lithium battery, the electrode 11 comprising a coating layer 14 formed on a metal layer 10 of the electrode 11, **characterized in that** the coating layer 14 comprises the composition of any of the preceding claims.

7. The electrode of claim 6, wherein a weight ratio of the metal compound MC to the organic binder OB in the coating layer 14 is from 0.1 to 10, preferably from 0.2 to 9.5, more preferably from 0.3 to 9.0, even more preferably from 0.4 to 8.5, even more preferably from 0.5 to 8.0, even more preferably from 0.8 to 7.0, and most preferably from 1.0 to 6.0.

8. The electrode of claims 6 or 7, further comprising a lithium salt added in the coating layer, and/or wherein the thickness of the coating layer can be 0.1 µm - 300 µm, more preferably 0.5 µm - 100 µm, even more preferably 1 µm - 50 µm, and most preferably 2 µm - 20 µm.

9. A method for making the electrode (11) of any of the claims 6-8, the method comprising: preparing at least one mixture comprising an organic binder OB, wherein the binder is selected from the group consisting of poly(vinylidene fluoride), copolymer of vinylidene fluoride and hexafluoropropylene, poly(vinyl acetate), polyethylene oxide), poly(methyl methacrylate), poly(ethyl acrylate), poly(vinyl chloride), poly(urethane), poly(acrylonitrile), polyethylene glycol), polypropylene glycol, poly(ethylene glycol-co-propylene glycol-co-ethylene glycol), poly(propylene glycol-co-ethylene glycol-co-propylene glycol), polysiloxane, poly(oxyethylene)methacrylate, poly(ethylene glycol)diacrylate, poly(propylene glycol)diacrylate, poly(ethylene glycol)dimethacrylate, poly(propylene glycol)dimethacrylate, poly(ethylene glycol)-dimethyl ether, poly(ether amine), copolymer of ethylene and vinyl acetate, carboxyl methyl cellulose, poly(imide), and mixtures thereof and a metal compound MC selected from the group consisting of a hydrophobic surface modified fumed magnesium oxide, hydrophobic surface modified fumed lithium doped magnesium oxide, hydrophobic surface modified fumed magnesium phosphate or mixtures thereof, wherein the metal compound comprises aggregates of primary particles, to prepare a first mixture (102) wherein a weight ratio of the metal compound to the organic binder in the composition is from 0.1 to 10, coating the first mixture on the surface of the metal layer (10) to form a pre-coating layer (104); and drying and/or curing the pre-coating layer (106) to form the coating layer (14).

10. The method of claim 9, wherein the at least one mixture comprises a first mixture and a second mixture, the first mixture comprising the metal compound particles and a first solvent, the second mixture comprising the organic binder, second solvent and optionally a lithium salt, wherein the first and second solvents are the same or different, wherein the first mixture comprises preferably 1% - 70%, more preferably 3% - 60%, even more preferably 5% - 50%, and most preferably 7% - 45%, by weight of the metal compound and 30% - 99%, more preferably 40% - 97%, even more preferably 50% - 95%, and most preferably 55% - 93%, by weight of the solvent, wherein he second mixture comprises 0.1% - 90%, preferably 0.5% - 50%, more preferably 1% - 20%, more preferably 2% - 10%, by weight of the organic binder and 10% - 99.9%, preferably 50% - 99.5%, more preferably 80% - 99%, more preferably 90% - 98%, by weight of the solvent, and wherein the curing of the coating mixture includes a chemical reaction, physical curing or a combination thereof.

11. The method claims 9 or 10, wherein the drying and/or curing step (106) is preferably performed at a temperature of from 0°C to 500°C, more preferably from 5°C to 400°C, more preferably from 10°C to 300°C, more preferably from 20°C to 200°C, in the presence of air or preferably with exclusion of oxygen under a protective-gas atmosphere of nitrogen or argon and at a standard pressure or under a reduced pressure, for example under vacuum.

12. The method of any of claims 9 to 11, wherein the metal compound of the is obtained by a pyrogenic process involving flame oxidation, flame hydrolysis, and/or flame pyrolysis of a starting material, in a hydrogen and/or oxygen flame, wherein the starting material for the metal compound is an organic and/or inorganic metal compound, such as metal chlorides, metal nitrates, metal acetates, metal carboxylates.

13. The method of any of the preceding claims, wherein the metal compound is obtained by the flame spray pyrolysis process, wherein a metal precursor such as a metal chloride is vaporized and reacted in a flame generated by the reaction of hydrogen and oxygen to form the metal compound in the form of particles, and wherein the metal compound comprises aggregates of primary particles and some primary particles having a BET specific surface area of 1 m²/g to 500 m²/g, more preferably 20 m²/g to 400 m²/g, even more preferably from 40 m²/g to 350 m²/g and most preferably from 50 m²/g to 300 m²/g, determined according to DIN 9277:2014 by nitrogen adsorption in accordance with the Brunauer-Emmett-Teller method, wherein a number mean aggregate particle size d50 is less than 2 µm, preferably 20 nm - 1 µm, more preferably 30 nm - 800 nm, even more preferably 40 nm - 600 nm, and most preferably 50 nm - 500 nm, wherein the number mean particle size d50 is determined in an aqueous dispersion, by dynamic light scattering (DLS).

14. The method of any of the preceding claims, wherein the metal compound is obtained by a pyrogenic process followed with an ultrasonic process whereby agglomerates and partly some aggregates are destroyed resulting in a powder with a smaller particle size and a narrower particle size distribution, wherein preferably the number mean aggregate particle diameter d50 of the metal compound after the ultrasonic process is 50 nm - 1000 nm, more preferably 100 nm - 700 nm, even more preferably 150 nm - 500 nm, as determined by dynamic light scattering (DLS) after 300 seconds of ultrasonic treatment at 25 °C of a mixture consisting of 5 % by weight of the particles and 95 % by weight of a 0.5 g/L solution of sodium pyrophosphate in water, wherein the span (d90-d10)/d50 of the particles of the metal compound is preferably 0.4-1.2, more preferably 0.5-1.1, even more preferably 0.6-1.0, as determined by dynamic light scattering (DLS) after 300 s of ultrasonic treatment at 25 °C of a mixture consisting of 5 % by weight of the particles and 95 % by weight of a 0.5 g/L solution of sodium pyrophosphate in water.

15. A lithium battery comprising the electrode 11 of any of the claims 6 -8.

16. An apparatus comprising the lithium battery of claim 15, the apparatus comprising an electric or electronic device including a mobile phone, an electronic watch, a camera, a key fab, a laptop computer, a desktop computer, a computer pad, a power tool, a vacuum cleaner, an electric lawn mower, a robot, an electric appliance, an electric airplane and an electric vehicle.
